# EUROPEAN PATENT APPLICATION

(11) **EP 2 090 943 A1**
(43) Date of publication of application: **19.08.2009**
(21) Application number: 08002184.3
(22) Date of filing: 06.02.2008
(51) Int. Cl.: G05B 19/042, H04L 29/00

(54) **Control method for remote installations**

(71) Applicant: Acque Ingegneria S.r.l., 56121 Pisa (IT); BRE ELETTRONICA S.r.l., 56010 Pisa (IT)
(72) Inventor: Barsanti, Andrea, 56122 La Vettola (PI) (IT)
(74) Representative: Celestino, Marco

(57) **Abstract**

A control method for remote installations through data processing networks, in particular, through a data processing network (1) with TCP/IP protocol, said installations comprising equipment (6a, 6b) such as measuring instruments of process variables and actuators of mechanical and electric devices of various type, such as valves, motors, pumps and other machines in civil or industrial installations. The method provides prearranging a server (2) wherein a gateway (11) resides on a first port (12) of the server having a public static IP address visible in the network. A terminal of the network, which can be a user (3) for controlling the plant or a peripheral device (4,5) associated with an equipment (6a,6b) of the plant, requires and obtains a dynamic IP address (10) and a grant to access said terminal. Then, a request is carried out of a connection to the gateway by said terminals through said first port. The connection is accepted and said dynamic IP address is recorded through the gateway. The gateway then asks and obtains from the terminal a identification code proper of the terminals, which code is recorded in a table (16) of correspondence among dynamic IP addresses and identification codes of the terminals. This table is used for all the operations of communication with the terminal.

## Description

### Field of the invention

The present invention relates to a control method for remote installations through data processing networks, said installations comprising equipment such as measuring instruments of process variables and actuators of mechanical and electric devices of various type, such as valves, motors, pumps and other machines.

The term control method embraces the use of functions of data acquisition for displaying and/or changing the data in a user interface, functions for generating alarms, blocks, tuning operations, as well as functions of adjustments.

The method according to the invention can be used for example for remote controlling process installations, such as plants for chemicals and the like, for the food industry, for making energy, purification plants, hydraulic, mechanical, electric plants, etc.

### Background of the invention

All the known methods for controlling remote installations provide a communication step between peripheral devices associated with operating equipment and at least one point, called supervision unit, said supervision unit, for example being arranged at a user's remote control station. Said peripheral device and supervision unit are called terminals.

The remote control system according to said methods require communication means or connections between terminals, such connections forming a local network (LAN) or extended network (WAN), according to whether the object of the control are a single installation or several installations, distributed in a more or less wide territory. For example, systems that perform said methods are called respectively SCADA (Supervisory Control And data acquisition) or DCS (Distribued Control System).

In particular, said communication means can be:
- cables, for example telephone twin cables, associated with a modem;
- electromagnetic waves, normally set in the frequency bands known as UHF and VHF, said electromagnetic signals coupling to proprietary networks comprising one or more radio links and GSM that uses public networks.

In the last decades as means of communication between terminals the Internet and Intranet connections have developed. Said terminals gain access to the network transmitting the data on public networks, always by means of cables, modem and/or electromagnetic waves. PSTN or ADSL connections respectively are also cable connections with analog or digital modem whereas for radiofrequency connections GPRS and UMTS systems are used.

The known methods of remote control system provide, furthermore, a step of identification of the terminals. Means for identification can be, for example, telephone numbers, radio addresses, IP addresses.

In particular, an IP address, being a succession of numbers, normally four, and in such a case it is called IPv4, each set between 0 and 255 and separated by dots, thus allowing to generate a very high number of addresses. However, the system of IP addresses is becoming less appropriate due to a very diffused use of Internet and of data processing networks generally for transmitting data.
in order to overcome this problem various solutions have been proposed. A first solution consists of using a TCP/IP protocol that provides sequences of six numbers instead of four, this version being called IPv6. A generalized use of IPv6 requires however a long time and very high costs.

A second solution a method called NET/Gateway, still based on the use of IP addresses under IPv4. Said method provides distinguishing static IP addresses and dynamic IP addresses. Whereas the former are invariably associated with a determined subject, which is identified always with the same address whenever it is connected to the network, the latter, instead, are allocated to a subject at the beginning of a connection and have validity for the only duration of the connection same. actually, said dynamic IP addresses identify a connection and not a connected subject.

Such NET/Gateway method is already largely used for normal Internet utilizations and in mobile phone systems: for example, the common GPRS/UMTS and PSTN connections, as well as private ADSL, use dynamic IP addresses.

In case of controlling remote installations, the use of dynamic IP addresses is known in many successive connections for identifying even different terminals, provided said terminals are not always connected to the data processing network. A same group of terminals requires then a number of IP addresses smaller than a group consisting of only static IP addresses.

However, in case of the systems of controlling remote installations, the use of dynamic IP addresses has some difficulties.

In particular, the data packets sent by a same peripheral device in successive connections, and sent to a user of the control, or to a control device, must provide coherent sets, i.e. it shoulkd be able to identify univocally the peripheral device that has sent them.

For example, a user of a remote control system of a plant must be adapted to assign univocally to a determined peripheral device, typically a determined measuring instrument, the data displayed in an assigned area of the interface associated with said user. Similarly, the writing a coherent registration, or trend, of historical values of a process variable, by adjoining data packets obtained in successive connections of the associated peripheral devices with an instrument that detects this variable, requires a univocal identification of the instrument at any updating of the registration.

An univocal identification of the terminals is clearly impossible by using only dynamic IP addresses. A dynamic IP address allows a connection to the network but not the visibility of a terminal, nor a communication with other peripheral devices, said IP address being unknown to said other terminal.

Presently, the various solutions proposed in order to solve this problem have given not much satisfactory results. On the other hand, the use of static IP addresses, as above described, is scarcely practicable for controlling remote installations.

### Summary of the invention

It is then a feature of the present invention to provide a control method for remote installations through data processing networks with dynamic IP addresses that allows an univocal identification of terminals, said terminals being peripheral devices associated with operating equipment of the installations or supervision units associated with users of the control.

It is another feature of the present invention to provide a control method for remote installations that avoids the use of additional data repeating apparatus sent from peripheral devices to equipment of the installation.

These and other objects are achieved through a remote control method of an equipment of a plant by a user through a data processing network with TCP/IP protocol, said data processing network comprising:
- prearranging a computer, called server, said server comprising a program means, called gateway, said gateway being connected to a first port of said server, said first port having a public static IP address visible in said data processing network,
- requesting an access to the data processing network by a terminal selected from the group comprised of:

- a supervision unit associated with said user,
- a peripheral device associated with said equipment,
- assigning a dynamic IP address and granting access to said terminal,
   the main feature of the method being to provide, furthermore, the steps of:

- requesting a connection to the gateway by said terminals through said first port,
- accepting the connection and storing said dynamic IP address by said gateway,
- requesting from the gateway to the terminal an identification code proper of the terminal,
- sending said identification code to the gateway by the terminal,
- storing from the gateway said identification code and said dynamic IP address in a table of correspondence among dynamic IP addresses and identification codes of the terminals.

Actually, each time that a terminal is connected, the gateway updates said table of correspondence among dynamic IP addresses and terminal identification codes. This way, the terminal can communicate without possessing static addresses, being it enough that they reach through the data processing network the gateway accessible through said first port of the server.

In particular, the connection of the peripheral device to the data processing network can be carried out in a known way, according to a technique chosen for example among:
- Ethernet,
- GPRS, wherein the dynamic IP address is granted by a network service provider or IAP,
- radio waves of wavelength preferably comprised within known bands such as UHF or VHF, wherein the method comprises a step of radio conversion towards Ethernet or towards GPRS through the above described steps.

In particular, the connection of the supervision unit to the data processing network can be carried out in a known way, by a technique chosen for example among:
- Ethernet,
- GPRS,
- ADSL,
- PSTN,

In the last three cases an operation of a IAP being provided for assigning the IP address.

In particular, a user can obtain data relative to an equipment of the installation through a specific query. To this end, the method can comprise the steps of:
- requesting data relative to a peripheral device, said requesting step being formulated to the gateway by a user through a control unit, said requesting step declaring the identification code proper of said peripheral device,
- searching the current IP address of said peripheral device, i.e. the connection bound by the peripheral device by the table of correspondence through the gateway,
- sending the request to said peripheral device on said connection through the gateway.

Not exclusively, to this end, the method can comprise a step of request for data transmission to a control unit, this request being formulated to the gateway by a peripheral device, said requesting step declaring the identification code proper of said control unit.

Always not exclusively, to this end, the method can comprise, furthermore, the steps of:
- searching the current control unit IP address, i.e. of the connection associated to said control unit by the table of correspondence through the gateway,
- sending the data to said control unit on said connection by said gateway.
   Said steps of transmitting requests and data are allowed associating requests and data to a header that contains an univocal identification of the addressee and an univocal identification of the sender, and associating said identifications in a TCP/IP packet. This packet is sent to the server on the previously open connection.
   Preferably, said server can comprise furthermore
- program means called master,
- a a data registration zone called database, this database being associated with a seconda port of the server, said method comprising, furthermore, the steps of:

- transferring data from the gateway to the master,
- analysing data and choosing relevant data by the master,
- registering relevant data in the database by the master.

Furthermore, the method can provide a step of data transmission from the database to a supervision unit through said second port of the server.

Alternatively, data relative to an equipment of the installation can be obtained by a user of the control or from the database according to a program, said program comprising temporal limits and/or alarm conditions.

To this purpose and in a first aspect, the method can comprise a step of assigning temporal limits by a user preferably through a supervision unit, such temporal limits cause data to be sent from a peripheral device to the gateway and from the gateway to a supervision unit for being notified to a user, or from the gateway to the master for registration in the database.

Preferably, such temporal limits are recorded in a peripheral device associated with said equipment of the installation.

In particular, such temporal limits can be defined by equal time intervals, said intervals forming a frequency of data transmission from said peripheral device.

In a second aspect of the invention. and for the same objects, the method can provide a step of defining conditions of alarm by a user, preferably through a supervision unit associated with said user, such conditions being for example:
- exceeding an assigned threshold value by a process variable,
- missing confirmation of execution of a command to a peripheral device associated with an actuator, advantageously after a determined number of iterations of said command,
- missing receipt of commands from a peripheral device for a determined time interval,
   Such conditions of alarm causing a data transmission from said peripheral device to the gateway and from the gateway to a supervision unit for being notified to a user, or from the gateway to the master for registration in the database, in particular, for compilation of historical alarm data.

Preferably, such conditions are recorded in said peripheral device.

Some peripheral devices, normally associated with measuring instruments, which can be in series or in parallel to each other, can carry out, further to the described functions of transmission of data, also automatic actuating functions of other peripheral devices, normally associated with actuators.

In this case the data, alarms and controls, are preferably exchanged directly between peripheral devices, for example by radio. The server, can, in any case, carry out contemporaneous functions of notifying an alarm to a supervision unit through the gateway, according to the steps of search and sending above described, or of registration of alarms and events in the database through the gateway and the master.

A step can be provided of defining alarm conditions, by a user, such that at said conditions of alarm the steps are repeated according to a determined time interval, until the condition of alarm that the has caused it is present. Such conditions of alarm can be recorded in a peripheral device.

To this purpose, a condition of alarm can cause the generation of a command, this command being a signal sent from a first peripheral device, called master peripheral device, to a second peripheral device, called slave peripheral device. This chain of generation, transmission and running controls is called automatism, in this case said method providing at least two peripheral devices associated with operating equipment of the installation, of which one is an instrument and the other is an actuator.

Preferably, the step of sending said command is repeated according to a determined time interval, until the condition of alarm that has generated it remains.

The method can comprise furthermore, a step of disconnecting an automatism.

Preferably, communication between a master peripheral device and a slave peripheral device is made through radio waves, for example of wavelength comprised within known bands such as VHF and UHF.

Furthermore, the method can comprise the steps of:
- generating a command by a user of the control through a control unit, said command being for a slave peripheral device,
- requesting a transmission of said command to said slave peripheral device, said requesting step being formulated to the gateway from said user through said control unit, said requesting step declaring the identification code proper of said peripheral device,
- searching the current IP address of said peripheral device, i.e. the connection associated to said slave peripheral device by the table of correspondence through the gateway,
- sending said command to said slave peripheral device on said connection by said gateway.

This way, a user of the control can operate an actuator for changing a status of an equipment, for example running or stopping a motor, or opening a valve, by receiving an alarm or in any case at the user's choice.

### Brief description of the drawings

The invention will be made clearer with the following description of an exemplary embodiment thereof, exemplifying but not limitative, with reference to the attached drawings wherein:
- Figure 1 is a diagrammatic view of a data processing network for remote controlling of a plant, according to the invention;
- Figure 2 is a diagrammatic view of exchange of data in a procedure of request and grant of an access of a terminal GPRS to the data processing network;
- Figures 3a and 3b show a diagrammatic view of exchange of data in phases of univocal identification of a terminal connected to the data processing network;
- Figure 4 is a diagrammatic view of exchange of data in a procedure of transmission of a requesting data or of a command formulated by a control unit and directed to a peripheral device;
- Figure 5 is a diagrammatic view of exchange of data in a procedure of updating data relative to a peripheral device.

### Description of preferred exemplary embodiments

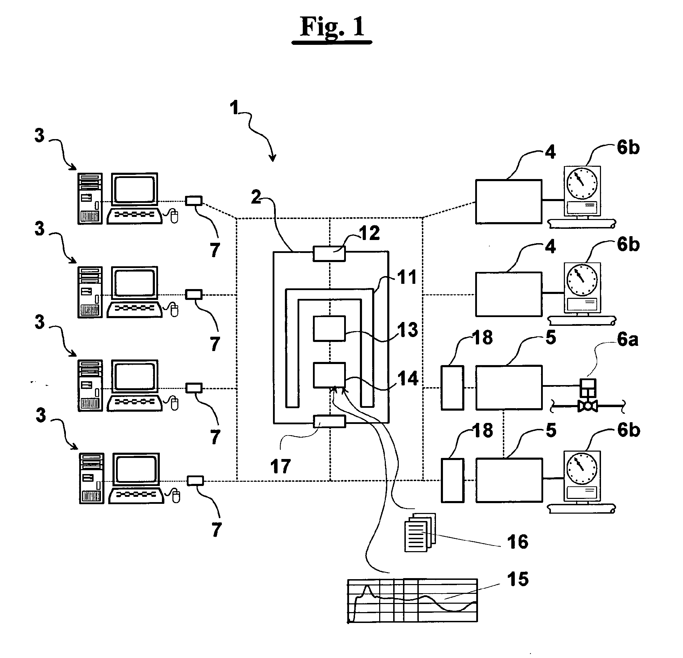

With reference to figure 1, an implementation is presented of the method according to the invention. For remote controlling a remote plant a data processing network 1 is available with TCP/IP protocol. It comprises a server 2, whose ports 12 and 17 are identified and shown in the network through TCP/IP public and static address.

The network comprises then a variable number of control unit 3, forming the interface with the users of the control, not shown in the figures, a variable number of peripheral devices 4 or 5, associated with operating equipment of a plant, such as measuring instruments 6b or actuators 6a, for example a valve. In the instantaneous status of the system shown in figure 1 four users are connected to the network through respective control units 3, and four peripheral devices 4 or 5.

In the example shown in figure 1, the control units 3 are connected to the network 1 by means of ADSL modem 7. Concerning the peripheral device 4 they are connected to the network 1 by means of integrated GPRS devices, whereas the peripheral device 5 have a radio connection and require further peripheral devices 18 with double radio/GPRS interface for connection to the network 1.

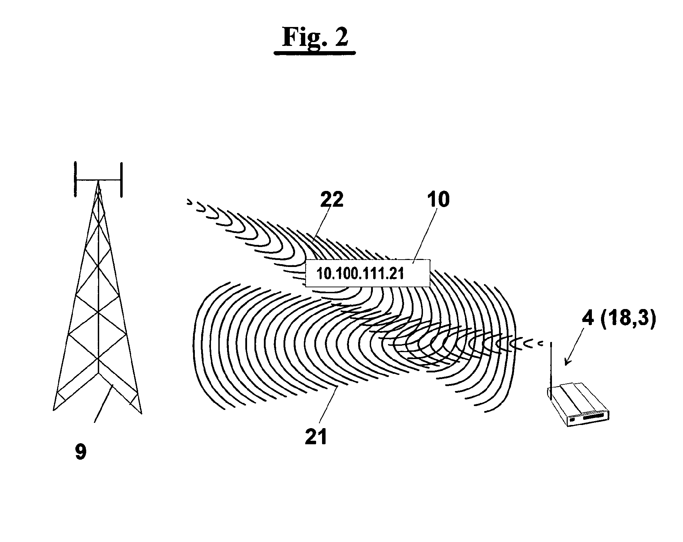

The mode of connection chosen for the control unit and the peripheral devices, respectively ADSL and GPRS, require the operation of a network services provider, diagrammaticlly shown with the symbol 9 (figure 2) for assigning to the terminal of a TCP/IP address 10, in this case of dynamic type, i.e. representstivo of a peripheral device during the sole current session.

Always with reference to the example of figure 1, in the server a gateway 11 is resodent, which dialog with each other components of the network through the port 12 of the server, available owing to a public static IP address visible in all the data processing network; nel server is furthermore, residing a master 13, which recepisce and selects the data from the gateway 11, and is furthermore, residing a database 14, on which the master 13 records data selected, in the shape of trend of process variables 15 and of storici 16 of alarms and events. this database is accessible by a port dedicated 17, which are also available from each point of the data processing network owing to an IP address public and static.

Are now described the mode of operation of a control system that applies the method according to the invention.

A first procedure, common to all the mode of operation since preliminary an each exchange of data between components of the data processing network, is the request preparing for entering the data processing network 1 by the terminal. Figure 2 represents this process with reference to a peripheral device 4, but is valid also for peripheral devices 18 and the control unit 3, after change of these numbers to number 4, as indicated between brackets. This consideration is also valid for processes described hereinafter.

Firstly, the peripheral device 4 has a request 21 for entering the data processing network 1 to the network service provider 9. Then, the provider 9 inoltra a nulla-osta 22 to the connection and assegna to this connection an dynamic IP address 10.

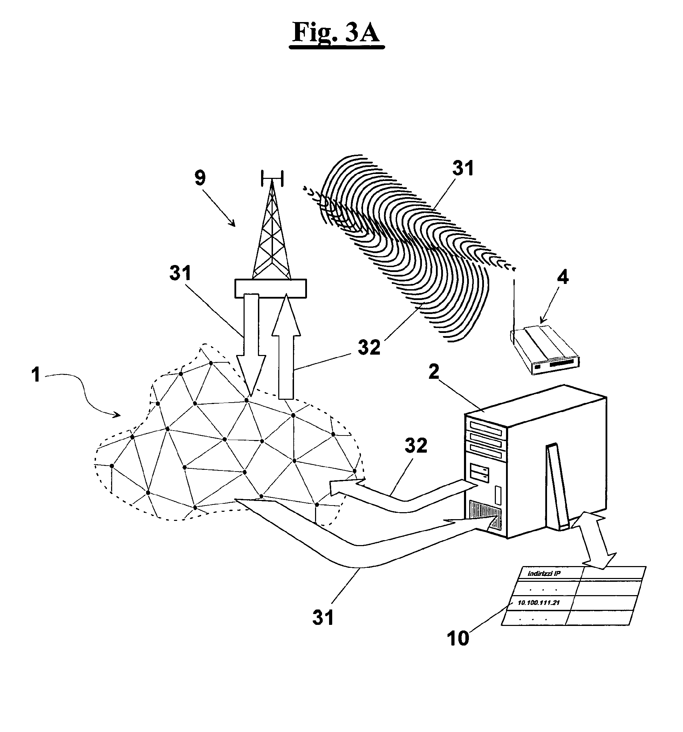

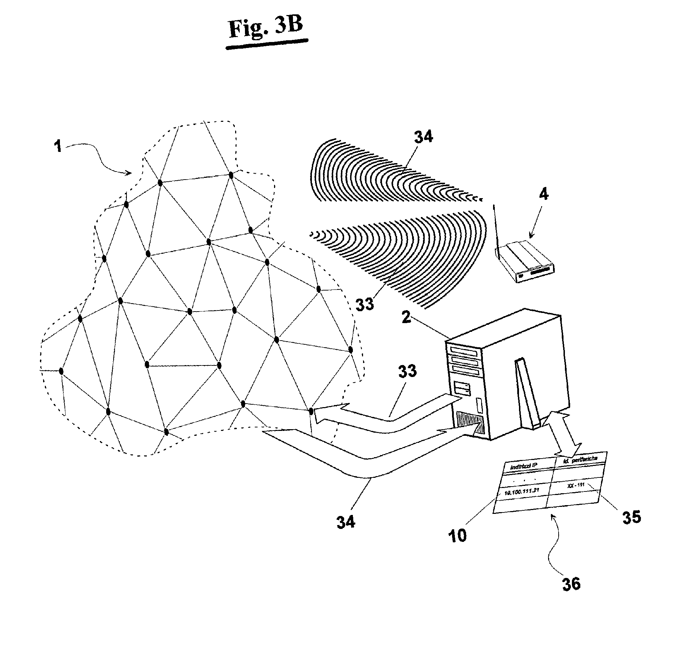

A second procedure causes an univocal identification of the terminal linked, cause to be possible the exchange of data between such terminal. Figures 3A and 3B show this process with reference to a peripheral device 4.

Firstly (figure 3A), the peripheral device 4 has a request 31 of connection to the server 2, more precisely to the gateway 11 through the port 12 (figure 1), visible owing to an IP address static known to the peripheral device 4. Then, the gateway 11 inoltra a nulla-osta 32 to the connection and annota the data relative to the new linking, i.e. the dynamic IP address 10 associated with the linking. At this point (figure 3B) the gateway 11 inoltra a request 33 an identification code proper to the peripheral device 4, which delivers a response 34 containing the identification code required 35. The gateway 11 stores the identification code 35 at the dynamic IP address 10, in a table 36 of correspondsnze between dynamic IP addresses of connection and identifiedvi of peripheral devices.

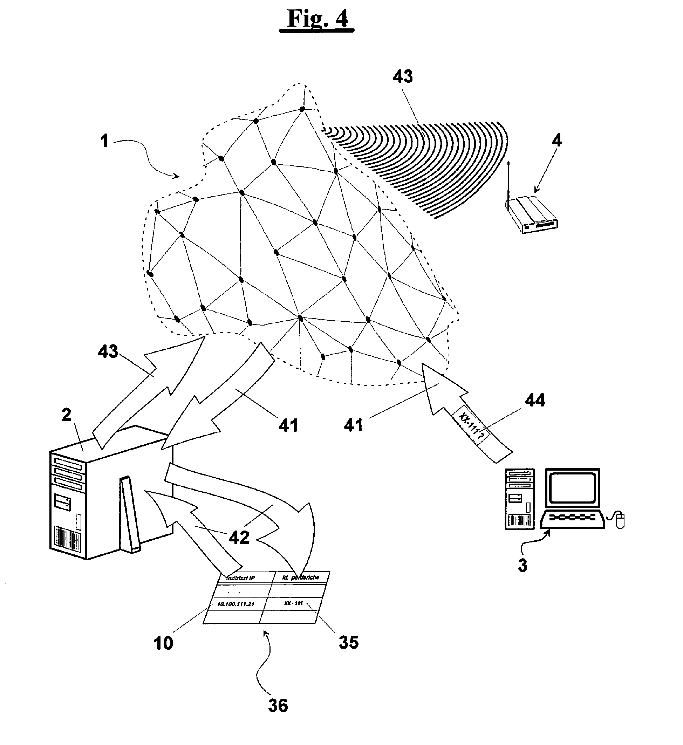

A third procedure, described with reference to figure 4, consists of sending a message to the server 2 by a control unit 3, said message being for an assegned peripheral devices 4. this message can be a request for updating data relative to a peripheral device associated with an instrument measuring 6b (figure 1), or a command for a peripheral device associated with an actuator 6a.

In the former case, the control unit 3 delivers to the gateway 11 a request 41 of updating the data of an assegned peripheral devices 4, connection to the request the identification code proper of the peripheral device same. The gateway 11 esegue a search 42 of the IP address 10 relative to the connection of the peripheral device 4 destinataria of the request for updating data, using for this search the table 36 of correspondence among dynamic IP addresses and identification codes of peripheral devices connected. once recovered the IP address 10, the gateway proceeds to the step of sending 43 of the request for updating data to the peripheral device 4.

In the latter case, val still the description now carried out replacing simply "request for updating dati" with "comando".

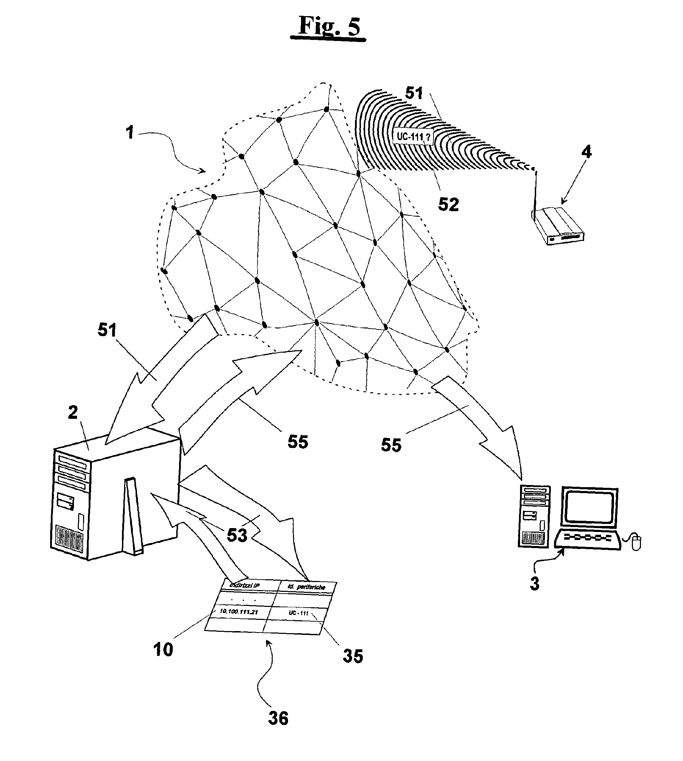

A fourth procedure, described with reference to figure 5, consists of data transmission to the server 2 by a peripheral device 4, such data being set to an assegned control unit 3. This procedure can be activated in response to a request for updating data, above described, or can be activated according to a program of time or a logic based on alarm conditions, this logic and this program being recorded in the peripheral device and/or nel server. The peripheral device 4 esegue then the step of sending 51 of a packet of data, corredato delil identification code 52 proper of the addressee, which in this case is the control unit 3.

If this procedure both activated in response to a request for the control unit, the dynamic IP address of the control unit destinataria of the data is known, since is weftngiven by the packet data that conteneva the demand, therefore the gateway 11 esegue the step of sending 55 of the data to the peripheral device 3.

In the other cases, it is known only the identification code proper of the addressee, therefore the gateway 11 must execute a search 53 of the IP address 54 relative to the connection of the or the control unit 3 destinatarie of the data, using for this search the table 36 of correspondence among dynamic IP addresses and identification codes of peripheral devices connected. once recovered the IP address 54, the gateway proceeds to the step of sending 55 of the request for updating data to the control unit 3.

Other sequences of transmission of data are, typically:
a) storing of a program in a peripheral device, which is similar to the first procedure;
b) registration of data nel database, which is similar to the fourth procedure;
c) running an automatism, in particular, in the shape of dialogo between peripheral devices where the server is not involved unless for functions of registration of events and alarms, unless for making reference to the table of corispondences;
d) disconnecting an automatism, which is similar to the first procedure;
e) consultation of the database by a user, as function accessoria, in a way similar to the first procedure.

The description of which above an exemplary embodiment specific of the method is capable of show the invention from a viewpoint conceptual so that other, using the prior art, can be changing and/or adapting in various applications this exemplary embodiment specific without further ricerche and without moving away from each other by the concept inventive, and, then is intended that such adaptation and changes will be high as equivalent of an exemplary embodiment specific. The means and the material to provide the various functions described can be changes nature without for this come out from the field of invention. is intended that the expressions or the terminology used have object purely describedvo and for this not limitative.

## Claims

1. A control method for remote controlling an equipment of a plant by a user, in particular, through a data processing network with TCP/IP protocol, said data processing network comprising:
- prearranging a computer, called server, said server comprising a program means, called gateway, said gateway being connected to a first port of said server, said first port having a public static IP address visible in said data processing network,
- requesting an access to the data processing network by a terminal selected from the group comprised of:
- a supervision unit associated with said user,
- a peripheral device associated with said equipment,
- assigning a dynamic IP address and granting access to said terminal,
**characterised in that it provides** furthermore, the steps of:
- requesting a connection to the gateway by said terminals through said first port,
- accepting the connection and storing said dynamic IP address by said gateway,
- requesting from the gateway to the terminal an identification code proper of the terminal,
- sending said identification code to the gateway by the terminal,
- storing from the gateway said identification code and said dynamic IP address in a table of correspondence among dynamic IP addresses and identification codes of the terminals.

2. Method, according to claim 1, wherein the connection of a terminal to said data processing network is made through radio waves of wavelength comprised within known bands such as UHF or VHF.

3. Method, according to claim 1, wherein the connection of a terminal to said data processing network is made through radio waves and a step is provided of radio conversion towards Ethernet or towards GPRS.

4. Method, according to claim 1, wherein the steps are provided of:
- requesting data relative to a peripheral device, said requesting step being formulated to said gateway by a user through a control unit, said requesting step declaring the identification code proper of said peripheral device,
- searching the current IP address of said peripheral device, i.e. of the connection associated to said peripheral device by said table of correspondence by said gateway,
- sending said requesting step to said peripheral device on said connection by said gateway.

5. Method, according to claim 1, wherein a step is provided of requesting data transmission to a control unit, said requesting step being formulated to said gateway by a peripheral device, said requesting step declaring the identification code proper of said control unit.

6. Method, according to claim 6, wherein the steps are provided of:
- searching the current control unit IP address, i.e. the connection associated to said control unit by said table of correspondence by said gateway,
- sending said data to said control unit on said connection by said gateway.

7. Method, according to claim 6, wherein said server can comprise furthermore
- program means called master,
- a data registration zone called database, this database being associated with a seconda port of the server,
said method comprising, furthermore, the steps of:
- transferring data from the gateway to the master,
- analysing data and choosing relevant data by the master,
- registering relevant data in the database by the master.

8. Method, according to claim 5, wherein a step is provided of assignment of data from said database to a supervision unit by a second port of the server.

9. Method, according to claims 6 and 7, wherein a step is provided of assegning temporal limits by a user through a supervision unit,d said temporal limits being recorded in a peripheral device associated with an equipment of the installation.

10. Method, according to claim 1, wherein the steps are provided of:
- generating a command by a user of the control through a control unit, said command being directed to a peripheral device associated with an actuator,
- requesting a transmission of said command to said peripheral device, said requesting step being formulated to said gateway from said user through said control unit, said requesting step declaring the identification code proper of said peripheral device,
- searching the connection relative to said peripheral device by said table of correspondence by said gateway,
- sending said command to said peripheral device on said connection by said gateway.

## Amended claims

### Amended claims in accordance with Rule 137(2) EPC.

**1.** A control method for remotely controlling an equipment of a plant by a user, in particular, through a data processing network with TCP/IP protocol, said data processing network comprising:
- prearranging a computer, called server, said server comprising a program means, called gateway, said gateway being connected to a first port of said server, said first port having a public static IP address visible in said data processing network,
- requesting an access to the data processing network by a terminal selected from the group comprised of:
- a supervision unit associated with said user,
- a peripheral device associated with said equipment,
- assigning a dynamic IP address and granting access to said terminal,
**characterised in that** it provides furthermore, the steps of:
- requesting a connection to the gateway by said terminals through said first port,
- accepting the connection and storing said dynamic IP address by said gateway,
- requesting from the gateway to the terminal an identification code proper of the terminal,
- sending said identification code to the gateway by the terminal,
- storing from the gateway said identification code and said dynamic IP address in a table of correspondence among dynamic IP addresses and identification codes of the terminals.

**2.** Method, according to claim 1, wherein the connection of a terminal to said data processing network is made through radio waves of wavelength comprised within known bands such as UHF or VHF.

**3.** Method, according to claim 1, wherein the connection of a terminal to said data processing network is made through radio waves and a step is provided of radio conversion towards Ethernet or towards GPRS.

**4.** Method, according to claim 1, wherein the steps are provided of:
- requesting data relative to a peripheral device, said requesting step being formulated to said gateway by a user through a control unit, said requesting step declaring the identification code proper of said peripheral device,
- searching the current IP address of said peripheral device, i.e. of the connection associated to said peripheral device by said table of correspondence by said gateway,
- sending said requesting step to said peripheral device on said connection by said gateway.

**5.** Method, according to claim 1, wherein a step is provided of requesting data transmission to a control unit, said requesting step being formulated to said gateway by a peripheral device, said requesting step declaring the identification code proper of said control unit.

**6.** Method, according to claim 6, wherein the steps are provided of:
- searching the current control unit IP address, i.e. the connection associated to said control unit by said table of correspondence by said gateway,
- sending said data to said control unit on said connection by said gateway.

**7.** Method, according to claim 6, wherein said server can comprise furthermore
- program means called master,
- a data registration zone called database, this database being associated with a seconda port of the server,
said method comprising, furthermore, the steps of:
- transferring data from the gateway to the master,
- analysing data and choosing relevant data by the master,
- registering relevant data in the database by the master.

**8.** Method, according to claim 5, wherein a step is provided of assignment of data from said database to a supervision unit by a second port of the server.

**9.** Method, according to claims 6 and 7, wherein a step is provided of assigning temporal limits by a user through a supervision unit,d said temporal limits being recorded in a peripheral device associated with an equipment of the installation.

**10.** Method, according to claim 1, wherein the steps are provided of:
- generating a command by a user of the control through a control unit, said command being directed to a peripheral device associated with an actuator,
- requesting a transmission of said command to said peripheral device, said requesting step being formulated to said gateway from said user through said control unit, said requesting step declaring the identification code proper of said peripheral device,
- searching the connection relative to said peripheral device by said table of correspondence by said gateway,
- sending said command to said peripheral device on said connection by said gateway.
